# FASCICULE DE BREVET EUROPEEN

(11) **EP 3 163 382 B1**
(45) Date de publication et mention de la délivrance du brevet: **01.08.2018**
(21) Numéro de dépôt: 15191437.1
(22) Date de dépôt: 26.10.2015
(51) Int. Cl.: G04B 47/06, G01C 22/00

(54) **PODOMETRE INTEGRE A UNE MONTRE MECANIQUE**
SCHRITTZÄHLER, DER IN EINE MECHANISCHE UHR INTEGRIERT IST
PEDOMETER BUILT INTO A MECHANICAL WATCH

(43) Date de publication de la demande: 03.05.2017
(73) Titulaire: The Swatch Group Research and Development Ltd., 2074 Marin (CH)
(72) Inventeur: Born, Jean-Jacques, 1110 Morges (CH); Ferri, Yvan, 1004 Lausanne (CH); Léchot, Dominique, 2732 Reconvilier (CH); Nicolas, Cédric, 2000 Neuchâtel (CH)
(74) Mandataire: Giraud, Eric

(56) Documents cités:
- EP-A1- 0 060 361
- US-A- 3 818 194
- US-A- 4 322 609
- US-A- 4 460 823

## Description

### Domaine de l'invention

L'invention concerne une montre comportant un mécanisme podomètre pour estimer un niveau d'activité physique, comportant au moins une masse mobile ou pivotante agencée pour entraîner un rochet, des moyens de maintien élastiques ou par friction pour maintenir ledit rochet en position entre deux mouvements de ladite masse mobile ou pivotante.

L'invention concerne le domaine des montres mécaniques, notamment des montres de type podomètre.

### Arrière-plan de l'invention

Depuis l'invention des montres podomètres au XIXème siècle, la quantification de l'activité physique humaine a beaucoup évolué, surtout depuis l'arrivée des montres à mouvement électronique. La conception de montres mécaniques pour ces utilisations a été délaissée, bien que nombre d'utilisateurs soient des inconditionnels des montres mécaniques, et ne souhaitent pas porter deux appareils différents, un pour la mesure et l'affichage du temps, et l'autre pour la mesure d'activité physique.

Le document US 4460823 A au nom de RUEHLEMANN GERHARD décrit un podomètre pour indiquer la distance parcourue par un marcheur ou un coureur, comportant un compteur numérique mécanique, entraîné au travers d'un train d'engrenages depuis une roue à rochet. Un pendule pivotant est maintenu dans une position de repos par un premier ressort de sollicitation, qui est adapté pour une utilisation lors de la marche. Pendant un fonctionnement de type course avec davantage d'énergie cinétique au niveau du pendule, un second ressort de rappel peut être engagé sélectivement avec le premier ressort de sollicitation, pour augmenter la tension de celui-ci, pour absorber l'énergie supplémentaire sans dommage pour l'appareil. Une butée mobile du pendule comporte un bouton de réglage externe pour régler la course du pendule selon la longueur de la foulée de l'utilisateur. L'utilisateur peut modifier la longueur de la foulée et le mode marche/course sans réinitialiser l'indicateur de distance numérique.

Le document US 3818194 A au nom de BIRO décrit un podomètre destiné à indiquer la distance parcourue par l'utilisateur, comportant dans un boîtier une plaque qui supporte un moyen indicateur de distance, ainsi que des moyens d'entraînement pour ce moyen indicateur, lesquels moyens d'entraînement comportent un train d'engrenages relié fonctionnellement au moyen indicateur, un pendule, des moyens pour monter de manière pivotante une extrémité de ce pendule à la plaque, ce pendule pouvant osciller dans un plan sensiblement perpendiculaire à la plaque de support, en réponse aux enjambées de l'utilisateur, des moyens pour convertir le mouvement d'oscillation du pendule en un mouvement de rotation incrémental du train d'engrenages.

### Résumé de l'invention

L'invention se propose d'intégrer un compteur de pas ou une mesure d'activité à une montre mécanique, en utilisant si possible des composants déjà existants dans la montre.

A cet effet, l'invention concerne une montre selon la revendication 1.

### Description sommaire des dessins

D'autres caractéristiques et avantages de l'invention apparaîtront à la lecture de la description détaillée qui va suivre, en référence aux dessins annexés, où :
- la figure 1 est un schéma-blocs représentant une montre comportant un mouvement, un mécanisme de quantième, des moyens d'affichage, un mécanisme de chronographe, des moyens de remise à zéro de l'affichage, et un mécanisme podomètre selon l'invention ;
- la figure 2 représente, de façon schématisée et en vue en plan, une première variante d'un mécanisme de comptage que comporte un mécanisme podomètre selon l'invention, comportant une masse pivotante dont un pignon de masse coopère avec une roue tronquée;
- la figure 3 est une vue en perspective de la première variante de la figure 2;
- la figure 4 représente, de façon similaire à la figure 2, une deuxième variante de mécanisme de comptage, où le pignon de masse coopère avec un levier entraîneur porteur d'une lame de transmission oblique;
- la figure 5 représente une autre réalisation de la deuxième variante de la figure 4, où le levier entraîneur est remplacé par un secteur denté porteur de la lame de transmission oblique;
- la figure 6 représente, de façon schématisée et en perspective, une première variante d'un mécanisme d'affichage que comporte un mécanisme podomètre selon l'invention, comportant un arbre cannelé faisant pivoter un secteur denté, ce mécanisme d'affichage comportant, de part et d'autre de cet arbre cannelé, un premier afficheur d'activité physique, et un deuxième afficheur de niveau de force ;
- la figure 7 est une vue en plan du mécanisme de la figure 6;
- la figure 8 est une vue de bout du mécanisme de la figure 6, dans un plan perpendiculaire à l'axe de l'arbre cannelé et au plan du secteur denté ;
- la figure 9 représente un détail d'une autre réalisation du mécanisme de la figure 6, où le premier afficheur et le deuxième afficheur sont côte à côte ;
- la figure 10 représente, de façon schématisée et en perspective, une deuxième variante de mécanisme d'affichage, avec un afficheur central par rapport à la montre ;
- la figure 11 est un schéma relatif au fonctionnement général du podomètre, à la remise à zéro de l'affichage, et à l'affichage d'activité physique, et de niveau de force ;
- les figures 12A à 12F sont plusieurs représentations de différentes variantes pour l'affichage de l'activité physique sur l'ensemble d'une semaine.

### Description détaillée des modes de réalisation préférés

L'invention concerne une montre 1, notamment une montre mécanique, agencée pour être fixée à un membre d'un utilisateur, comportant un mouvement 100 et des moyens d'affichage 80.

Cette montre 1 comporte un mécanisme podomètre 2, qui est agencé pour estimer un niveau d'activité physique lié à un déplacement du membre ou/et de l'utilisateur de la montre. La dénomination de podomètre est utilisée par défaut, car elle correspond à un type d'appareil connu du grand public, notamment sous forme électronique, et dont les applications ne sont depuis très longtemps plus limitées au seul comptage des pas qu'effectuaient les premiers mécanismes podomètres horlogers.

Le mécanisme podomètre 2 selon l'invention comporte deux parties : un mécanisme de comptage et un mécanisme d'affichage. Comme il sera exposé plus loin, selon les variantes, ce mécanisme d'affichage comporte ou non un mécanisme de remise à zéro.

Ce mécanisme podomètre 2 comporte au moins une masse mobile ou pivotante 3.

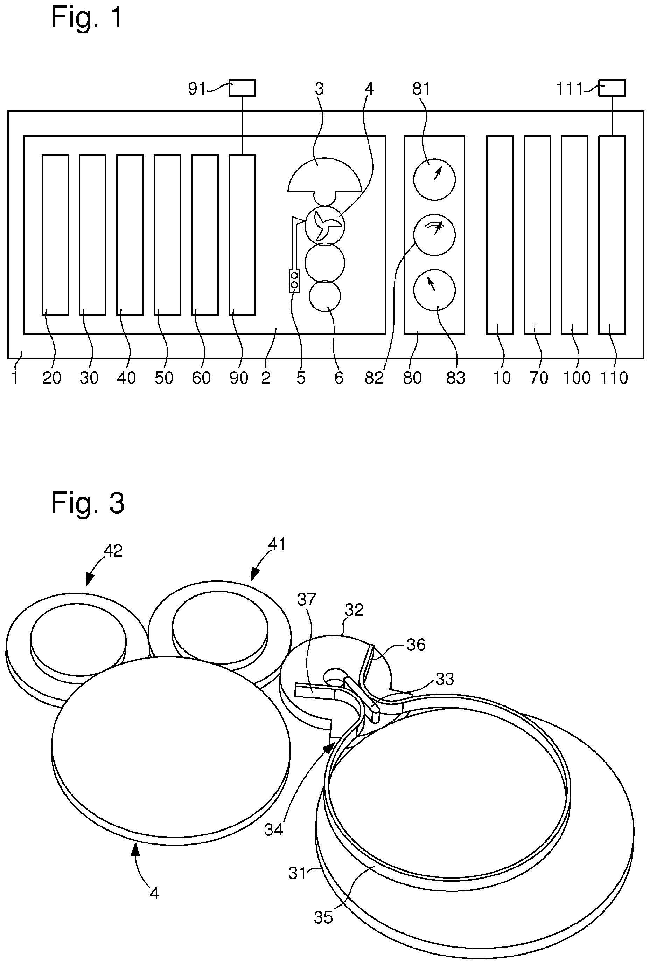

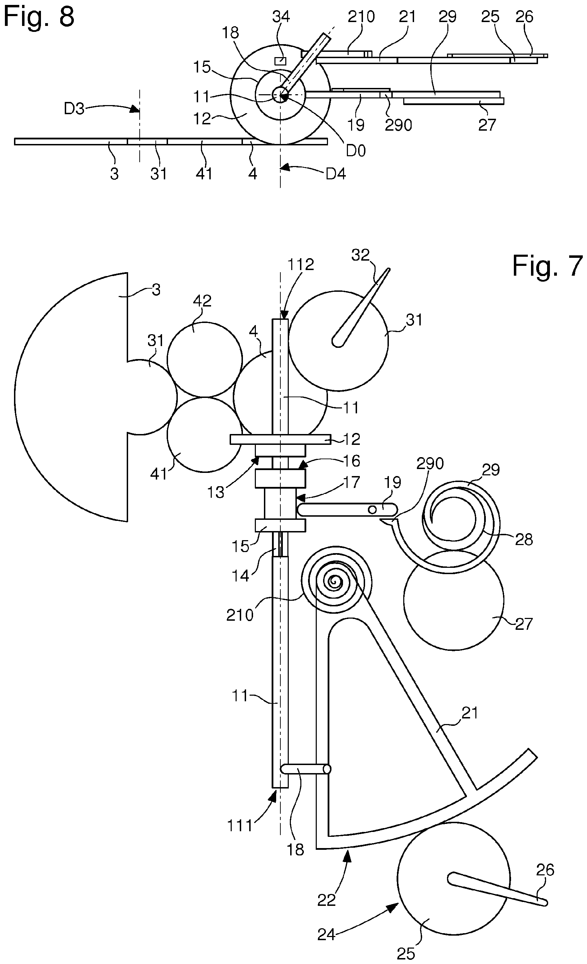

Dans un mode particulier de réalisation illustré par les figures 1 à 10, cette masse 3 est agencée pour pivoter autour d'un axe de masse D3 sous l'action des mouvements de l'utilisateur. Cette masse mobile ou pivotante 3 est agencée pour entraîner, directement ou indirectement, dans un sens de pivotement unique, au moins un rochet 4 autour d'un axe de rochet D4.

Cette masse mobile ou pivotante 3 est, de façon préférée mais non limitative, analogue à une masse oscillante de remontage automatique. Dans une réalisation particulière, la masse mobile ou pivotante 3 constitue aussi une masse oscillante de remontage automatique pour le rechargement en énergie d'un accumulateur de type barillet ou similaire.

Mais l'invention peut aussi être mise en oeuvre avec une masse 3 mobile autrement qu'en pivotement, avec une course linéaire ou le long d'une trajectoire particulière, par exemple circulaire dans une gorge ou similaire. La notion de mouvement se substitue alors à la notion restrictive de pivotement, et la notion de course, au sens large, se substitue à la notion de course angulaire.

Le mécanisme podomètre 2 comporte des moyens de maintien 5 du rochet 4, notamment par friction ou/et par rappel élastique. Ces moyens de maintien 5 sont agencés pour maintenir le rochet 4 en position entre deux mouvements ou pivotements, selon le cas, de la masse mobile ou pivotante 3.

Selon l'invention, ce rochet 4 entraîne de préférence un rouage 6, lequel est agencé pour afficher, sur au moins un premier afficheur 81 que comportent les moyens d'affichage 80 de la montre 1, une valeur qui correspond, à un facteur multiplicatif près, au nombre de mouvements de pivotement du rochet 4, ou/et à la valeur du pivotement angulaire cumulé du rochet 4.

Cette valeur affichée est donc caractéristique de l'activité déployée par l'utilisateur.

Avantageusement, la masse mobile ou pivotante 3 est agencée pour aussi effectuer le rechargement en énergie d'au moins un barillet ou accumulateur d'énergie.

Selon l'invention, le mécanisme podomètre 2 comporte un moyen de limitation 20, qui est agencé pour n'autoriser le pivotement du rochet 4 qu'à partir d'un seuil minimal correspondant à une course minimale, ou à une valeur angulaire minimale donnée θ₀, de mouvement ou respectivement de pivotement de la masse mobile ou pivotante 3.

Selon l'invention, le mécanisme podomètre 2 comporte un moyen de détection 30, qui est agencé pour détecter le sens de mouvement, notamment de pivotement, de la masse mobile ou pivotante 3. Et le mécanisme podomètre 2 comporte encore un moyen de verrouillage 40, lequel est agencé pour n'autoriser le pivotement du rochet 4 que si le moyen de détection 30 a enregistré, depuis le pivotement précédent du rochet 4, au moins un mouvement, notamment de pivotement, de la masse mobile ou pivotante 3 dans le sens opposé à celui qui permet l'entraînement du rochet 4.

Plus particulièrement, selon l'invention, le moyen de détection 30 comporte une première bascule qui est agencée pour être entraînée par la masse mobile ou pivotante 3, et qui change de position angulaire selon le sens de mouvement, notamment de pivotement, dans lequel elle est entraînée.

Selon l'invention, le moyen de verrouillage 40 comporte une deuxième bascule qui est agencée pour être immobilisée ou libérée par la première bascule, selon la position angulaire de la première bascule. Et cette deuxième bascule, selon la position qu'elle occupe, entrave ou non le pivotement du rochet 4.

Dans une réalisation particulière, le moyen de verrouillage 40 est un mécanisme différentiel totalisateur.

Dans une variante particulière, la montre 1 comporte un moyen de mesure 50 de la course de mouvement, notamment de pivotement, de la masse mobile ou pivotante 3 lors de chacun de ses mouvements, notamment de pivotement. La montre comporte encore de préférence un moyen de cumul 60 des valeurs absolues des courses successives mesurées par le moyen de mesure depuis un instant initial.

Plus particulièrement, la montre 1 comporte un moyen de commande 70 de détermination d'un instant initial et d'un instant final.

Plus particulièrement, les moyens d'affichage 80 comportent le premier afficheur 81, et un moyen d'affichage cumulatif 83 d'une grandeur homothétique à la valeur de cumul des valeurs absolues des courses successives, et la montre 1 comporte un moyen de remise à zéro 110 pour l'annulation de la valeur affichée par au moins un des moyens d'affichage 80.

Dans une réalisation particulière par défaut, chaque jour, l'instant initial est à zéro heure, et l'instant final est à minuit.

Dans une réalisation particulière, le moyen de commande 70 est un mécanisme de chronographe.

De façon préférée, la montre 1 comporte un mécanisme de quantième 10, qui est agencé pour commander quotidiennement à minuit un mécanisme de remise à zéro 110 pour l'annulation des valeurs affichées sur au moins un premier afficheur 81. Cette commande peut encore être réalisée avec une roue de vingt-quatre heures et un mécanisme ad hoc pour commander un saut à minuit, bien connu de l'homme du métier.

Dans une variante particulière, de façon à adapter l'usage de la montre 1 et l'affichage qu'elle fournit à différents types d'activité correspondant à des catégories bien différenciées de dépense énergétique, la montre 1 comporte un moyen de démultiplication 90, qui est réglable par l'utilisateur au niveau d'un premier actionneur 91, pour modifier le rapport de transmission d'affichage, en fonction du type d'activité exercée par cet utilisateur.

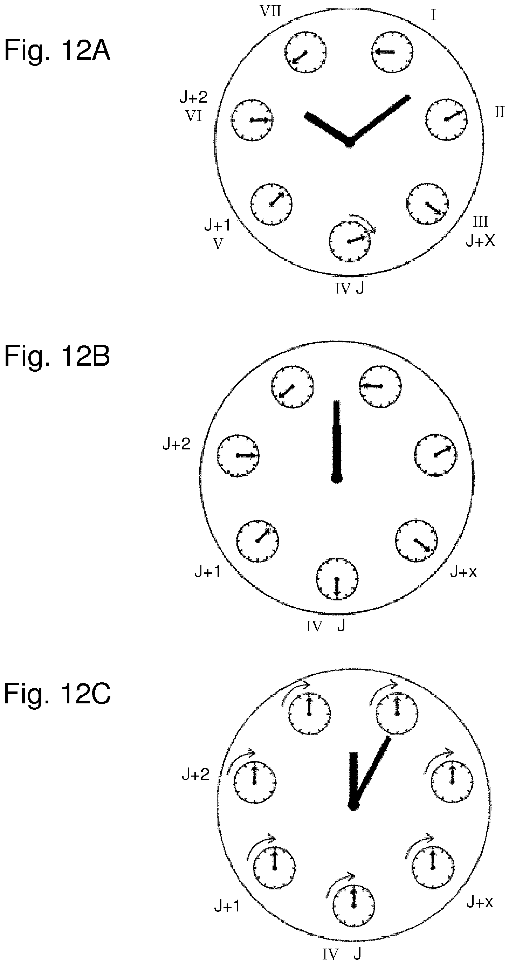

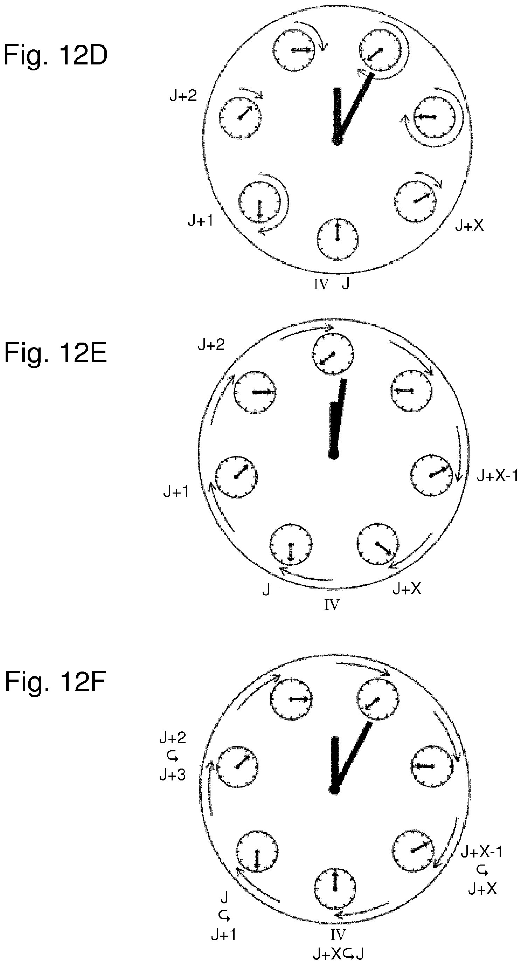

Dans une autre variante particulière, tel que visible dans des exécutions particulières sur la figure 12, la montre 1 comporte une pluralité de X+1 premiers afficheurs 81 correspondant chacun à un jour d'une période d'observation particulière, notamment ici avec X=6 correspondant à un jour de la semaine. Et la montre 1 comporte un mécanisme de quantième 10, qui est agencé pour commander quotidiennement avant minuit la remise à zéro d'un premier afficheur 81 du lendemain, et à minuit le passage de l'affichage du premier afficheur 81 de la veille au premier afficheur 81 du jour qui commence. Ainsi l'utilisateur peut, pendant sa période d'observation, notamment une semaine, conserver l'affichage simultané de dépense énergétique de chacun des jours successifs composant cette période, l'affichage relatif au jour le plus ancien étant effacé, chaque jour à minuit, au profit de l'affichage relatif au jour qui commence.

Dans l'exemple particulier des figures 12A à 12F, le cadran comporte, sur sept positions I, II, III, IV, V, VI, VII, sept petites aiguilles pour indiquer l'activité des sept derniers jours. A minuit un embrayage vertical passe d'une aiguille à la suivante en effectuant au préalable une remise à zéro. Chaque roue d'aiguille est maintenue en position par un léger frottement.

La représentation de la figure 12A concerne, sur le petit cadran IV, le jour J à 10h10, l'aiguille effectue un affichage incrémental de l'activité journalière. Les autres jours sont fixes : cadran V : J+1, cadran VI : J+2,..., cadran III : J+X. La représentation de la figure 12B concerne le même mécanisme, sur le petit cadran IV, le jour J à 24h00 il y a blocage de l'activité journalière. Après minuit, le mécanisme effectue le blocage de l'aiguille de la veille, et le débrayage avec l'entraînement de cette dernière.

Les représentations des figures 12C et 12D concernent le passage juste après minuit dans une variante avec des cadrans fixes, tandis que les représentations des figures 12E et 12F concernent le passage juste après minuit dans une variante avec des cadrans qui se déplacent d'un cran chaque jour, en tournant d'un incrément par rapport au grand cadran qui porte les petits cadrans secondaires.

Les représentations des figures 12C et 12D montrent le décalage d'activité d'un jour pour chaque cadran. Il y a débrayage du mécanisme d'indexage des cadrans, mise à zéro de tous les cadrans, mise à zéro de l'indication du jour J-1, et indexation des cadrans en décalant d'un jour. Le jour J est en position IV sur ces deux représentations.

Les représentations des figures 12E et 12F montrent le décalage d'activité d'un jour pour chaque cadran. Le jour J est en position IV sur la représentation de la figure 12E, et passe en position V sur la représentation de la figure 12F. Un mécanisme de rotation des disques permet de remplacer, en position IV, le jour J de la figure 12E par le jour J+X en figure 12F, avec mise à zéro de l'aiguille, et embrayage sur la transmission de l'activité journalière. Il y a débrayage du mécanisme d'indexage des cadrans, mise à zéro de tous les cadrans, mise à zéro de l'indication du jour J-1, indexation des cadrans en décalant d'un jour.

Dans une variante particulière, la montre 1 comporte un actionneur 111, qui est actionnable par l'utilisateur, et qui est agencé pour commander un mécanisme de remise à zéro 110 d'annulation des valeurs affichées sur au moins un premier afficheur 81.

Les figures 1 à 10 décrivent quelques exemples de réalisation non limitatifs d'éléments constitutifs d'un mécanisme podomètre 2 selon l'invention.

La masse mobile ou pivotante 3 comporte de préférence un pignon de masse 31. Ce pignon de masse 31 est avantageusement agencé pour coopérer, directement ou indirectement, avec une paire de roues inverseuses 41, 42, qui sont agencées pour transmettre un mouvement dans un sens de pivotement unique au rochet 4. Un tel mécanisme est bien connu au niveau du remontage automatique, et n'est pas détaillé ici.

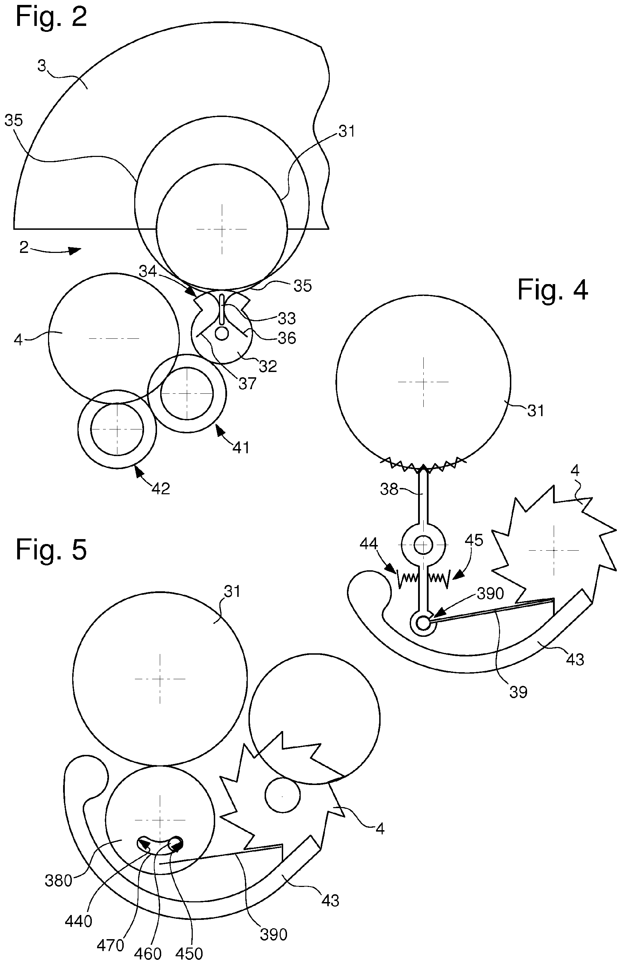

Sur la réalisation particulière des figures 2 et 3, le pignon de masse 31 engrène avec un premier secteur denté 34, lequel est denté sur moins de la moitié de sa périphérie, et qui comporte un doigt 33, lequel est rappelé vers une position centrale par des branches 36, 37, d'un ressort 35 de rappel de forme sensiblement circulaire entourant le pignon de masse 31 ou la masse mobile ou pivotante 3. Ce secteur denté 34 est solidaire d'une roue 32, qui engrène avec une des roues inverseuses 41, 42, et le ressort 35 constitue ici le moyen de limitation 20.

Sur la réalisation particulière des figures 4 et 5, la masse mobile ou pivotante 3 comporte un pignon de masse 31 qui est agencé pour entraîner en pivotement un levier entraîneur 38, ou un secteur entraîneur 380 sur la figure 5, qui est rappelé vers une position médiane par des lames de rappel élastique 44, 45, et qui porte une lame de transmission 39 oblique. La transmission entre la roue 31 et la roue 380 se fait par frottement car la roue 31 doit toujours pouvoir tourner quand la goupille 460 bloque la roue 380. La lame de transmission oblique 39, ou 390 sur la figure 5, peut être pivotée, avec une course limitée ou/et un rappel élastique, dans un logement 391. Pour la figure 5, le rappel élastique peut se faire par la coopération élastique d'un pion 460 monté élastiquement par rapport à une structure, par rapport auquel pion pivote un oblong 470 limité par des surfaces d'appui de butée 440 et 450. Cette lame de transmission 39 oblique est agencée pour, dans un unique sens de pivotement du levier entraîneur 38 ou du secteur entraîneur 38A, pousser la denture d'une roue à cliquet coopérant avec le rochet 4 ou pour pousser directement la denture du rochet 4 pour faire pivoter celui-ci, et, pour glisser sur la roue à cliquet ou respectivement le rochet 4 sans l'entraîner, dans le sens de pivotement opposé.

Dans une réalisation particulière, le moyen de limitation 20 comporte au moins un sautoir de transmission 43, qui coopère avec la denture du rochet 4 pour interdire son pivotement quand la masse mobile ou pivotante 3 se déplace d'un angle inférieur à la valeur angulaire minimale donnée θ₀.

Sur la variante des figures 4 et 5, le sautoir 43 est agencé pour coopérer avec la roue à cliquet ou respectivement le rochet 4 pour interdire son retour en arrière.

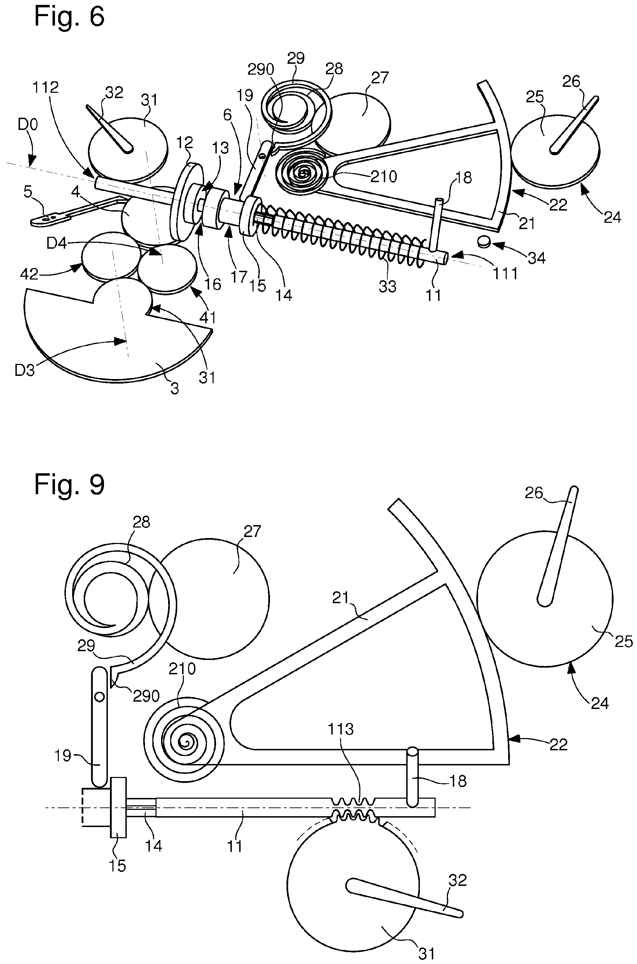

Sur la réalisation particulière des figures 6 à 9, le rochet 4 comporte une denture qui est agencée pour coopérer avec une denture complémentaire d'une roue d'entraînement 12 d'axe perpendiculaire à celui du rochet 4, maintenu par un sautoir 5. Cette roue d'entraînement 12 entraîne en pivotement un arbre 11 qui est porteur, au niveau d'une zone cannelée, d'un pignon coulant 15 repoussé vers la roue d'entraînement 12 par un premier moyen de rappel élastique 33. Cet arbre 11 porte un bras radial 18, qui est agencé pour repousser, à l'encontre d'un deuxième moyen de rappel élastique 23, un deuxième secteur denté 21 qui s'étend dans un plan parallèle à l'axe de pivotement D0 de l'arbre 11 et à distance de celui-ci, et dont une denture 22 entraîne une roue 25 que comporte le premier afficheur 81. Au moins une butée 34 limite avantageusement la course angulaire de ce deuxième secteur denté 21, lequel est de préférence rappelé par un moyen de rappel élastique 210 vers l'arbre 11.

Plus particulièrement, et de façon avantageuse, l'arbre 11 est mobile axialement, selon des positions discrètes réglables par une action de l'utilisateur sur un premier actionneur 91, par exemple analogue à la traction d'une tige de mécanisme de remontage et de mise à l'heure. Le mécanisme des figures 6 à 9 peut d'ailleurs utiliser nombre de composants d'un tel mécanisme classique de remontage et de mise à l'heure. L'arbre 11 est alors agencé pour entraîner une roue 31 que comporte un deuxième afficheur 82 d'affichage du niveau de force de l'activité concernée.

Dans une variante, le plan d'évolution du deuxième secteur denté 21 peut, sous l'action de l'utilisateur, être rapproché ou éloigné de l'axe de l'arbre 11 de façon à modifier le bras de levier, et donc le débattement.

De préférence, la montre 1 comporte un mécanisme de quantième 10 commandant le saut journalier à minuit d'un doigt 290 d'un ressort 29 pour faire pivoter un levier 19 coopérant avec une gorge 17 du pignon coulant 15, pour ramener ce dernier à l'encontre du premier moyen de rappel élastique 33.

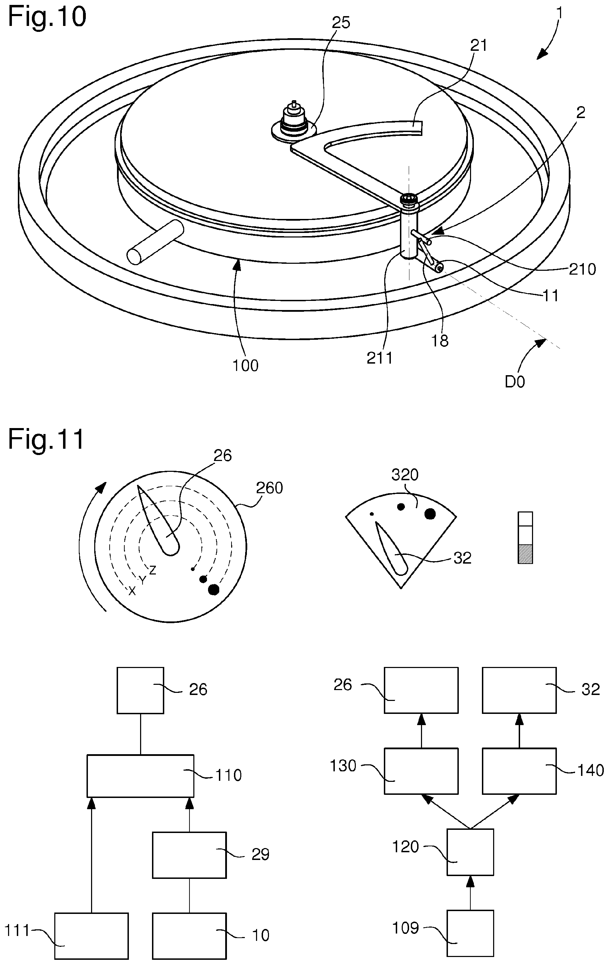

La figure 10 représente une deuxième variante de mécanisme d'affichage, avec un afficheur 25 central par rapport à la montre 1. Cet afficheur 25 est également commandé par un deuxième secteur denté 21, qui est solidaire d'un fût 211 et d'un deuxième bras 210, situé dans un plan parallèle à un arbre 11 similaire à celui de la figure 6, lequel arbre 11 comporte aussi un bras oblique 18 qui pousse le deuxième bras 210 et fait pivoter le fût 211 et donc le deuxième secteur denté 21. Là aussi, il est facile, grâce au système râteau-goupille, de faire varier le rapport de transmission pour changer le niveau de force de référence.

En somme, il est possible de spécialiser la montre 1 pour un usage déterminé.

Par exemple, pour une montre 1 à strict usage de podomètre, le nombre de pas est égal au nombre de va-et-vient de la masse mobile ou pivotante 3. Un mécanisme fait par exemple avancer une aiguille d'un incrément, lorsqu'il détecte un angle de rotation du rotor supérieur à une valeur minimale donnée, de façon à filtrer les mouvements parasites.

Pour une version d'évaluation du taux d'activité, le taux d'activité est proportionnel au mouvement total de la masse mobile ou pivotante. Pour totaliser la rotation cumulée de la masse mobile ou pivotante, il est possible d'utiliser un mécanisme connu, de type réserve de marche, toutefois sans la liaison avec le barillet qui diminuerait continuellement l'indication de l'activité.

Telle que visible sur la figure 11, la remise à zéro quotidienne est réalisée :
- soit par un mécanisme de quantième 10 de la montre 1, ou encore par une roue de vingt-quatre heures, qui commande un mécanisme d'activation toutes les vingt-quatre heures, par exemple le bec du ressort 29 de la figure 6 commandant le pivotement du levier 19,
- soit manuellement par un poussoir ou un deuxième actionneur 111 commandant une remise à zéro,
- soit par l'un et l'autre.

Le mécanisme de remise à zéro 110 commande alors le mouvement de l'aiguille de taux d'activité 26, par rapport à un cadran 260.

La figure 10 résume encore l'affichage d'activité physique et de niveau de force. Une couronne de réglage 109 agit sur un mécanisme de réglage d'amplitude 120, qui agit, d'une part sur un mécanisme de transmission d'objectif 130 commandant le déplacement d'une aiguille de taux d'activité 26 par rapport à un cadran d'activité 260, et d'autre part un mécanisme de transmission d'échelle 140 commandant le déplacement d'une aiguille 32 de niveau de force par rapport à un cadran de niveau de force 320, ou encore une barre par rapport à une échelle, ou similaire.

L'utilisation du mécanisme de quantième 10 permet aussi de réaliser un affichage animé, par exemple sous la forme d'un personnage qui élève les bras de plus en plus haut pendant la journée en fonction de l'activité physique cumulée, et dont les bras retombent lors du passage de minuit.

## Revendications

1. Montre (1) comportant un mécanisme podomètre (2) pour estimer un niveau d'activité physique, comportant au moins une masse mobile ou pivotante (3) agencée pour entraîner un rochet (4), des moyens de maintien (5) élastiques ou par friction pour maintenir ledit rochet (4) en position entre deux mouvements de ladite masse mobile ou pivotante (3), où ledit rochet (4) entraîne un rouage (6) affichant sur un afficheur (81) une valeur correspondant, à un facteur multiplicatif près, au nombre de mouvements de pivotement dudit rochet (4), ou/et à la valeur du pivotement angulaire cumulé dudit rochet (4), et où ledit mécanisme podomètre (2) comporte un moyen de limitation (20; 35; 43) n'autorisant le pivotement dudit rochet (4) qu'à partir d'un seuil minimal correspondant à une course minimale de ladite masse (3) si elle est mobile ou à une valeur angulaire minimale (θ₀) de pivotement de ladite masse (3) si elle est pivotante, où ledit mécanisme podomètre (2) comporte un moyen de détection (30) agencé pour détecter le sens de mouvement de ladite masse mobile ou pivotante (3), et comporte un moyen de verrouillage (40) agencé pour n'autoriser le pivotement dudit rochet (4) que si ledit moyen de détection (30) a enregistré, depuis le pivotement précédent dudit rochet (4), au moins un mouvement de ladite masse mobile ou pivotante (3) dans le sens opposé à celui qui permet l'entraînement dudit rochet (4), où ledit moyen de détection (30) comporte une première bascule agencée pour être entraînée par ladite masse mobile ou pivotante (3) et changeant de position angulaire selon le sens de mouvement ou pivotement dans lequel elle est entraînée, **caractérisée en ce que** ledit moyen de verrouillage (40) comporte une deuxième bascule agencée pour être immobilisée ou libérée par ladite première bascule, selon la position angulaire de ladite première bascule, et **en ce que** ladite deuxième bascule entrave ou non le pivotement dudit rochet (4), selon la position angulaire de ladite deuxième bascule .

2. Montre (1) selon la revendication 1, **caractérisée en ce que** ledit moyen de verrouillage (40) est un mécanisme différentiel totalisateur.

3. Montre (1) selon la revendication 1 ou 2, **caractérisée en ce que** ladite montre (1) est agencée pour être fixée à un membre d'un utilisateur, **en ce que** ledit mécanisme podomètre (2) est agencé pour estimer un niveau d'activité physique lié à un déplacement dudit membre ou dudit utilisateur de ladite montre, **en ce que** au moins une dite masse (3) est agencée pour pivoter autour d'un axe de masse (D3) sous l'action des mouvements de l'utilisateur et laquelle masse (3) qui est pivotante est agencée pour entraîner, directement ou indirectement, dans un sens de pivotement unique au moins un dit rochet (4) autour d'un axe de rochet (D4), ledit mécanisme podomètre (2) comportant des moyens de maintien (5) dudit rochet (4) par friction ou/et rappel élastique agencés pour maintenir ledit rochet (4) en position entre deux pivotements de ladite masse (3) qui est pivotante, et ledit rochet (4) entraînant un rouage (6) agencé pour afficher, sur au moins un premier afficheur (81) que comporte ladite montre (1), une valeur correspondant, à un facteur multiplicatif près, au nombre de mouvements de pivotement dudit rochet (4), ou/et à la valeur du pivotement angulaire cumulé dudit rochet (4), et **en ce que** ledit moyen de limitation (20; 35; 43) est agencé pour n'autoriser le pivotement dudit rochet (4) qu'à partir d'un seuil minimal correspondant à une valeur angulaire minimale donnée (0o) de pivotement de ladite masse (3).

4. Montre (1) selon l'une des revendications 1 à 3, **caractérisée en ce que** ledit mécanisme podomètre (2) comporte un moyen de mesure (50) de la course de mouvement de ladite masse mobile ou pivotante (3) lors de chacun de ses mouvements, et un moyen de cumul (60) des valeurs absolues des courses successives mesurées par ledit moyen de mesure (50) depuis un instant initial, et **en ce que** ladite montre (1) comporte un moyen de commande (70) de détermination dudit instant initial et d'un instant final, et **en ce que** ladite montre comporte des moyens d'affichage (80) comportant ledit premier afficheur (81) et un moyen d'affichage cumulatif (83) d'une grandeur homothétique à la valeur de cumul desdites valeurs absolues des courses successives, et **en ce que** ladite montre (1) comporte un mécanisme de remise à zéro (110) pour l'annulation de la valeur affichée par ledit moyen d'affichage cumulatif (83).

5. Montre (1) selon la revendication 4, **caractérisée en ce que**, chaque jour, ledit instant initial est à zéro heure, et ledit instant final est à minuit.

6. Montre (1) selon la revendication 4 ou 5, **caractérisée en ce que** ledit moyen de commande (70) est un mécanisme de chronographe.

7. Montre (1) selon la revendication 5 ou 6 **caractérisée en ce que** ladite montre (1) comporte un mécanisme de quantième (10) agencé pour commander quotidiennement à minuit un mécanisme de remise à zéro (110) pour l'annulation des valeurs affichées sur ledit au moins un premier afficheur (81).

8. Montre (1) selon l'une des revendications 1 à 7, **caractérisée en ce que** ledit mécanisme podomètre (2) comporte un moyen de démultiplication (90) réglable par l'utilisateur au niveau d'un premier actionneur (91) pour modifier le rapport de transmission d'affichage, en fonction du type d'activité exercée par ledit utilisateur, et pour sélectionner, sur un deuxième afficheur (82) que comportent des moyens d'affichage (80) de ladite montre (1), une échelle de niveau de force.

9. Montre (1) selon l'une des revendications 1 à 8, **caractérisée en ce que** ladite montre (1) comporte une pluralité de dits premiers afficheurs (81) correspondant chacun à un jour de la semaine, et comporte un mécanisme de quantième (10) agencé pour commander quotidiennement avant minuit la remise à zéro d'un dit premier afficheur (81) du lendemain, et à minuit le passage de l'affichage dudit premier afficheur (81) de la veille audit premier afficheur (81) du jour qui commence.

10. Montre (1) selon l'une des revendications 1 à 9, **caractérisée en ce que** ladite montre (1) comporte un deuxième actionneur (111) actionnable par l'utilisateur et agencé pour commander un mécanisme de remise à zéro (110) pour l'annulation des valeurs affichées sur ledit au moins un premier afficheur (81).

11. Montre (1) selon l'une des revendications 1 à 10, **caractérisée en ce que** ledit moyen de limitation (20; 35; 43) comporte au moins un sautoir de transmission (43) coopérant avec la denture dudit rochet (4) pour interdire son pivotement quand ladite masse mobile ou pivotante (3) se déplace d'une course inférieure à une course minimale donnée ou d'un angle inférieur à ladite valeur angulaire minimale donnée (θ₀).

12. Montre (1) selon l'une des revendications 1 à 11, **caractérisée en ce que** ladite masse mobile ou pivotante (3) est pivotante et comporte un pignon de masse (31) agencé pour coopérer, directement ou indirectement, avec une paire de roues inverseuses (41, 42) agencées pour transmettre un mouvement dans un sens de pivotement unique audit rochet (4).

13. Montre (1) selon la revendication 12, **caractérisée en ce que** ledit pignon de masse (31) engrène avec un premier secteur denté (34) denté sur moins de la moitié de sa périphérie et qui comporte un doigt (33) rappelé dans une position centrale par des branches (36, 37) d'un ressort (35) de rappel de forme sensiblement circulaire entourant ledit pignon de masse (31) ou ladite masse mobile ou pivotante (3), ledit secteur denté (34) étant solidaire d'une roue (32) engrenant avec une desdites roues inverseuses (41, 42), ledit ressort (35) constituant ledit moyen de limitation (20; 35; 43).

14. Montre (1) selon l'une des revendications 1 à 10, **caractérisée en ce que** ladite masse mobile ou pivotante (3) comporte un pignon de masse (31) agencé pour entraîner en pivotement un levier entraîneur (38) ou un secteur entraîneur (38A) qui est rappelé vers une position médiane par des lames de rappel (44 ; 45) et qui porte une lame de transmission (39) oblique agencée pour, dans un unique sens de pivotement dudit levier entraîneur (38) ou dudit secteur entraîneur (38A), pousser la denture d'une roue à cliquet coopérant avec ledit rochet (4) ou pour pousser directement la denture dudit rochet (4) pour faire pivoter celui-ci, et, pour glisser sur ladite roue à cliquet ou respectivement ledit rochet (4) sans l'entraîner, dans le sens de pivotement opposé.

15. Montre (1) selon les revendications 11 et 14, **caractérisée en ce que** ledit sautoir (43) est agencé pour coopérer avec ladite roue à cliquet ou respectivement ledit rochet (4) pour interdire son retour en arrière.

16. Montre (1) selon l'une des revendications 1 à 15, **caractérisée en ce que** ledit rochet (4) comporte une denture agencée pour coopérer avec une denture complémentaire d'une roue d'entraînement (12) d'axe perpendiculaire à celui dudit rochet (4) et entraînant en pivotement un arbre (11) porteur, au niveau d'une zone cannelée, d'un pignon coulant (15) repoussé vers ladite roue d'entraînement (12) par un premier moyen de rappel élastique (33), ledit arbre (11) portant un bras radial (18) agencé pour repousser, à l'encontre d'un deuxième moyen de rappel élastique (23), un deuxième secteur denté (21) s'étendant dans un plan parallèle à l'axe de pivotement (D0) dudit arbre (11) et à distance de celui-ci et dont une denture (22) entraîne une roue (25) que comporte ledit premier afficheur (81)

17. Montre (1) selon la revendication 16, **caractérisée en ce que** ledit arbre (11) est mobile axialement selon des positions discrètes réglables par une action de l'utilisateur, et est agencé pour entraîner une roue (31) que comporte un deuxième afficheur (82) d'affichage du niveau de force de l'activité concernée.

18. Montre (1) selon la revendication 16 ou 17, **caractérisée en ce que** ladite montre comporte un mécanisme de quantième (10) commandant le saut journalier à minuit d'un doigt d'un ressort (29) pour faire pivoter un levier (19) coopérant avec une gorge (17) dudit pignon coulant (15) pour ramener ce dernier à l'encontre dudit premier moyen de rappel élastique (33).

19. Montre (1) selon l'une des revendications 1 à 17, **caractérisée en ce que** ladite masse mobile ou pivotante (3) est agencée pour effectuer le rechargement en énergie d'au moins un barillet ou accumulateur d'énergie.

## Patentansprüche

1. Uhr (1), umfassend einen Schrittzählermechanismus (2) zum Abschätzen eines Ausmaßes körperlicher Aktivität, der mindestens eine bewegliche oder drehende Masse (3), die dafür ausgelegt ist, ein Sperrrad (4) anzutreiben, und elastische oder reibschlüssige Haltemittel (5) umfasst, um das Sperrrad (4) zwischen zwei Bewegungen der beweglichen oder drehenden Masse (3) in Position zu halten, wobei das Sperrrad (4) ein Räderwerk (6) antreibt, das auf einer Anzeige (81) einen Wert anzeigt, der, bis auf einen Multiplikationsfaktor, der Anzahl von Drehbewegungen des Sperrrades (4) und/oder dem Wert der kumulierten Winkelbewegung des Sperrrades (4) entspricht, wobei der Schrittzählermechanismus (2) ein Begrenzungsmittel (20; 35; 43) umfasst, das die Drehung des Sperrrades (4) nur ab einem minimalen Schwellenwert zulässt, der einer minimalen Bahn der Masse (3) entspricht, falls sie beweglich ist, oder einem minimalen Winkelwert (0o) der Drehung der Masse (3) entspricht, falls sie drehbar ist, wobei der Schrittzählermechanismus (2) ein Detektionsmittel (30) umfasst, das dafür ausgelegt ist, die Bewegungsrichtung der beweglichen oder drehenden Masse (3) zu detektieren, und ein Verriegelungsmittel (40) umfasst, das dafür ausgelegt ist, die Drehung des Sperrrades (4) nur zuzulassen, falls das Detektionsmittel (30) ausgehend von der vorhergehenden Drehung des Sperrrades (4) mindestens eine Bewegung der beweglichen oder drehenden Masse (3) in der Richtung, die zu jener entgegengesetzt ist, die den Antrieb des Sperrrades (4) erlaubt, aufgezeichnet hat, wobei das Detektionsmittel (30) eine erste Wippe aufweist, die dafür ausgelegt ist, durch die bewegliche oder drehende Masse (3) angetrieben zu werden, und ihre Winkelposition je nach Bewegungs- oder Drehrichtung, in der sie angetrieben wird, ändert, **dadurch gekennzeichnet, dass** das Verriegelungsmittel (40) eine zweite Wippe aufweist, die dafür ausgelegt ist, durch die erste Wippe je nach Winkelposition der ersten Wippe festgesetzt oder freigegeben zu werden, und dass die zweite Wippe die Drehung des Sperrrades (4) je nach Winkelposition der zweiten Wippe hemmt oder nicht hemmt.

2. Uhr (1) nach Anspruch 1, **dadurch gekennzeichnet, dass** das Verriegelungsmittel (40) ein differentieller Zählmechanismus ist.

3. Uhr (1) nach Anspruch 1 oder 2, **dadurch gekennzeichnet, dass** die Uhr (1) dafür ausgelegt ist, an einer Gliedmaße eines Benutzers befestigt zu werden, dass der Schrittzählermechanismus (2) dafür ausgelegt ist, ein Ausmaß einer mit einer Bewegung der Gliedmaße oder des Benutzers der Uhr verbundenen körperlichen Aktivität abzuschätzen, dass mindestens eine Masse (3) dafür ausgelegt ist, sich unter der Wirkung der Bewegungen des Benutzers um eine Massenachse (D3) zu drehen, und die Masse (3), die drehbar ist, dafür ausgelegt ist, direkt oder indirekt in einer einzigen Drehrichtung mindestens ein Sperrrad (4) um die Sperrradachse (D4) anzutreiben, wobei der Schrittzählermechanismus (2) Mittel (5) zum Halten des Sperrrades (4) durch Reibung und/oder elastische Rückstellung umfasst, die dafür ausgelegt sind, das Sperrrad (4) an seiner Position zwischen zwei Drehungen der Masse (3), die drehbar ist, zu halten, und wobei das Sperrrad (4) ein Räderwerk (6) antreibt, das dafür ausgelegt ist, auf mindestens einer ersten Anzeigevorrichtung (81), die die Uhr (1) aufweist, einen Wert anzuzeigen, der, bis auf einen Multiplikationsfaktor, der Anzahl von Drehbewegungen des Sperrrades (4) oder dem kumulierten Winkeldrehwert des Sperrrades (4) entspricht, und dass das Begrenzungsmittel (20; 35; 43) dafür ausgelegt ist, die Drehung des Sperrrades (4) nur ab einem minimalen Schwellenwert, der einem gegebenen minimalen Winkelwert (0o) der Drehung der Masse (3) entspricht, zuzulassen.

4. Uhr (1) nach einem der Ansprüche 1 bis 3, **dadurch gekennzeichnet, dass** der Schrittzählermechanismus (2) ein Mittel (50) zum Messen der Bewegungsbahn der beweglichen oder drehbaren Masse (3) bei jeder ihrer Bewegungen und ein Mittel (60) zum Kumulieren von Absolutwerten aufeinander folgender Bahnen umfasst, die durch das Messmittel (50) ab einem anfänglichen Zeitpunkt gemessen werden, und dass die Uhr (1) ein Steuermittel (70) zum Bestimmen des Anfangszeitpunkts und eines Endzeitpunkts umfasst und dass die Uhr Anzeigemittel (80) umfasst, die die erste Anzeigevorrichtung (81) und ein Mittel (83) zum kumulativen Anzeigen einer Größe umfasst, die zu dem kumulierten Wert der Absolutwerte aufeinander folgender Bahnen homothetisch ist, und dass die Uhr (1) einen Nullrücksetzmechanismus (110) umfasst, um den von dem kumulativen Anzeigemittel (83) angezeigten Wert zu löschen.

5. Uhr (1) nach Anspruch 4, **dadurch gekennzeichnet, dass** jeden Tag der Anfangszeitpunkt null Uhr ist und der Endzeitpunkt Mitternacht ist.

6. Uhr (1) nach Anspruch 4 oder 5, **dadurch gekennzeichnet, dass** das Steuermittel (70) ein Chronographenmechanismus ist.

7. Uhr (1) nach Anspruch 5 oder 6, **dadurch gekennzeichnet, dass** die Uhr (1) einen Datumsmechanismus (10) umfasst, der dafür ausgelegt ist, täglich um Mitternacht einen Nullrücksetzmechanismus (110) zu steuern, um die Werte, die auf der mindestens einen ersten Anzeigevorrichtung (81) angezeigt werden, zu löschen.

8. Uhr (1) nach einem der Ansprüche 1 bis 7, **dadurch gekennzeichnet, dass** der Schrittzählermechanismus (2) ein Untersetzungsmittel (90) umfasst, das vom Benutzer auf Höhe einer ersten Betätigungseinrichtung (91) regulierbar ist, um das Anzeigeübersetzungsverhältnis in Abhängigkeit vom Typ der von dem Benutzer ausgeübten Aktivität zu verändern und um auf einer zweiten Anzeigevorrichtung (82), die die Anzeigemittel (80) der Uhr (1) umfassen, eine Kraftniveau-Skala auszuwählen.

9. Uhr (1) nach einem der Ansprüche 1 bis 8, **dadurch gekennzeichnet, dass** die Uhr (1) eine Mehrzahl von ersten Anzeigevorrichtungen (81) umfasst, die jeweils einem Tag der Woche entsprechen, und einen Datumsmechanismus (10) umfasst, der dafür ausgelegt ist, täglich vor Mitternacht die Nullrücksetzung einer ersten Anzeigevorrichtung (81) des folgenden Tags und um Mitternacht den Übergang der Anzeige der ersten Anzeigevorrichtung (81) des vorherigen Tags zu der ersten Anzeigevorrichtung (81) des beginnenden Tags zu steuern.

10. Uhr (1) nach einem der Ansprüche 1 bis 9, **dadurch gekennzeichnet, dass** die Uhr (1) eine zweite Betätigungseinrichtung (111) umfasst, die durch den Benutzer betätigbar ist und dafür ausgelegt ist, einen Nullrücksetzmechanismus (110) für die Löschung der auf der mindestens einen ersten Anzeigevorrichtung (81) angezeigten Werte zu steuern.

11. Uhr (1) nach einem der Ansprüche 1 bis 10, **dadurch gekennzeichnet, dass** das Begrenzungsmittel (20; 35; 43) mindestens eine Übertragungshebelfeder (43) umfasst, die mit der Zahnung des Sperrrades (4) zusammenwirkt, um seine Drehung zu verhindern, wenn sich die bewegliche oder drehbare Masse (3) auf einer Bahn verlagert, die kleiner als eine gegebene minimale Bahn ist, oder sich um einen Winkel verlagert, der kleiner als der gegebene minimale Winkelwert (0o) ist.

12. Uhr (1) nach einem der Ansprüche 1 bis 11, **dadurch gekennzeichnet, dass** die bewegliche oder drehbare Masse (3) drehbar ist und ein Masseritzel (31) aufweist, das dafür ausgelegt ist, direkt oder indirekt mit einem Paar Umkehrräder (41, 42) zusammenzuwirken, die dafür ausgelegt sind, eine Bewegung in einer einzigen Drehrichtung des Sperrrades (4) zu übertragen.

13. Uhr (1) nach Anspruch 12, **dadurch gekennzeichnet, dass** das Masseritzel (31) mit einem ersten Zahnsektor (34) kämmt, der mindestens auf der Hälfte seines Umfangs gezahnt ist und der einen Finger (33) aufweist, der durch Schenkel (36, 37) einer Rückstellfeder (35), die im Wesentlichen kreisförmig ist und das Masseritzel (31) oder die bewegliche oder drehbare Masse (3) umgibt, in eine Mittelposition zurückgestellt wird, wobei der Zahnsektor (34) fest mit einem Rad (32) verbunden ist, das mit einem der Umkehrräder (41, 42) kämmt, wobei die Feder (35) das Begrenzungsmittel (20; 35; 43) bildet.

14. Uhr (1) nach einem der Ansprüche 1 bis 10, **dadurch gekennzeichnet, dass** die bewegliche oder drehbare Masse (3) ein Masseritzel (31) umfasst, das dafür ausgelegt ist, einen Antriebshebel (38) oder einen Antriebssektor (38A) rotatorisch anzutreiben, der durch Rückstellplättchen (44; 45) in eine Mittelposition zurückgestellt wird und der ein quer verlaufendes Übertragungsplättchen (39) trägt, das dafür ausgelegt ist, in einer einzigen Drehrichtung des Antriebshebels (38) oder des Antriebssektors (38A) die Zahnung eines Sperrkegelrades anzuschieben, das mit dem Sperrrad (4) zusammenwirkt, oder direkt die Zahnung des Sperrrades (4) anzuschieben, um dieses zu einer Drehung zu veranlassen, und um in der entgegengesetzten Drehrichtung auf dem Sperrkegelrad oder entsprechend auf dem Sperrrad (4) zu gleiten, ohne es anzutreiben.

15. Uhr (1) nach den Ansprüchen 11 und 14, **dadurch gekennzeichnet, dass** die Hebelfeder (43) dafür ausgelegt ist, mit dem Sperrkegelrad oder entsprechend mit dem Sperrrad (4) zusammenzuwirken, um seine Rückkehr in Rückwärtsrichtung zu verhindern.

16. Uhr (1) nach einem der Ansprüche 1 bis 15, **dadurch gekennzeichnet, dass** das Sperrrad (4) eine Zahnung aufweist, die dafür ausgelegt ist, mit einer komplementären Zahnung eines Antriebsrades (12) mit einer zu jener des Sperrrades (4) senkrechten Achse zusammenzuwirken, das eine Welle (11) rotatorisch antreibt, die auf Höhe eines gerillten Bereichs ein Gleitritzel (15) trägt, das durch ein erstes elastisches Rückstellmittel (33) zu dem Antriebsrad (12) verschoben wird, wobei die Welle (11) einen radialen Arm (18) trägt, der dafür ausgelegt ist, entgegen einem zweiten elastischen Rückstellmittel (23) einen zweiten Zahnsektor (21) zu verschieben, der sich in einer Ebene parallel zu der Drehachse (D0) der Welle (11) und in einem Abstand hiervon erstreckt und dessen eine Zahnung (22) ein Rad (25) antreibt, das die erste Anzeigevorrichtung (81) aufweist.

17. Uhr (1) nach Anspruch 16, **dadurch gekennzeichnet, dass** die Welle (11) längs diskreter Positionen, die durch eine Betätigung des Benutzers regulierbar sind, axial beweglich ist und dafür ausgelegt ist, ein Rad (31) anzutreiben, das eine zweite Anzeigevorrichtung (82) aufweist, die das Kraftniveau der betreffenden Aktivität anzeigt.

18. Uhr (1) nach Anspruch 16 oder 17, **dadurch gekennzeichnet, dass** die Uhr einen Datumsmechanismus (10) umfasst, der den täglichen Sprung eines Fingers einer Feder (29) um Mitternacht steuert, um den Hebel (19), der mit einer Kehle (17) des Gleitritzels (15) zusammenwirkt, zu drehen, um diesen Letzteren entgegen dem ersten elastischen Rückstellmittel (33) zurückzustellen.

19. Uhr (1) nach einem der Ansprüche 1 bis 17, **dadurch gekennzeichnet, dass** die bewegliche oder drehbare Masse (3) dafür ausgelegt ist, die Wiederaufladung mit Energie mindestens eines Federhauses oder Energieakkumulators auszuführen.

## Claims

1. Watch (1) comprising a pedometer mechanism (2) for estimating a physical activity level, comprising at least one moving or pivoting weight (3) arranged to drive a ratchet (4), elastic or friction holding means (5) for holding said ratchet (4) in position between two movements of said moving or pivoting weight (3), wherein said ratchet (4) drives a gear train (6) displaying, on a display (81), a value corresponding, to within a multiplicative factor, to the number of pivoting motions of said ratchet (4), and/or to the value of the cumulative angular rotation of said ratchet (4), and wherein said pedometer mechanism (2) comprises a limiting means (20; 35; 43) only allowing the pivoting of said ratchet (4) from a minimum threshold corresponding to a minimum travel of said weight (3) if the weight is movable or to a minimum angular rotation value (θ₀) of said weight (3) if the weight pivots, wherein said pedometer mechanism (2) comprises a detection means (30) arranged to detect the direction of movement of said moving or pivoting weight (3), and comprises a locking means (40) arranged to only allow the pivoting of said ratchet (4) if said detection means (30) has recorded, since the preceding pivoting motion of said ratchet (4), at least one movement of said moving or pivoting weight (3) in the opposite direction to that which allows the driving of said ratchet (4), wherein said detection means (30) comprises a first lever arranged to be driven by said moving or pivoting weight (3) and changing angular position according to the direction of movement or pivoting in which the weight is driven, **characterized in that** said locking means (40) comprises a second lever arranged to be immobilised or released by said first lever, according to the angular position of said first lever, and **in that** said second lever prevents or allows the pivoting of said ratchet (4), according to the angular position of said second lever.

2. Watch (1) according to claim 1, **characterized in that** said locking means (40) is a differential totalling mechanism.

3. Watch (1) according to claim 1 or 2, **characterized in that** said watch (1) is arranged to be attached to a limb of a user, **in that** said pedometer mechanism (2) is arranged to estimate a physical activity level related to a movement of said limb or of said user of said watch, **in that** at least one said weight (3) is arranged to pivot about a weight axis (D3) under the action of movements of the user and said weight (3), which pivots, is arranged to drive, directly or indirectly, in only one direction of pivoting, at least one said ratchet (4) about a ratchet axis (D4), said pedometer mechanism (2) comprising means (5) for holding said ratchet (4) by friction and/or elastic return arranged to hold said ratchet (4) in position between two pivoting motions of said weight (3) which pivots, and said ratchet (4) driving a gear train (6) arranged to display, on at least one display (81) comprised in said watch (1), a value corresponding, to within a multiplicative factor, to the number of pivoting motions of said ratchet (4), and/or to the value of the cumulative angular rotation of said ratchet (4), and **in that** said limiting means (20; 35; 43) is arranged to only allow the pivoting of said ratchet (4) from a minimum threshold corresponding a given minimum angular rotation value (θ₀) of said weight (3).

4. Watch (1) according to claim 1 to 3, **characterized in that** said pedometer mechanism (2) comprises a means (50) for measuring the travel of movement of said moving or pivoting weight (3) during each of the movements thereof, and a means (60) for cumulating the absolute values of the successive travels measured by said measuring means (50) from an initial moment, and **in that** said watch (1) comprises a control means (70) for determining said initial moment and a final moment, and **in that** said watch comprises display means (80) comprising said first display (81) and a means (83) for the cumulative display of a magnitude homothetic to the cumulative value of said absolute successive travel values, and **in that** said watch (1) comprises a reset mechanism (110) for removing the value displayed by said cumulative display means (83).

5. Watch (1) according to claim 4, **characterized in that**, each day, said initial moment is at zero hour and said final moment is at midnight.

6. Watch (1) according to claim 4 or 5, **characterized in that** said control means (70) is a chronograph mechanism.

7. Watch (1) according to claim 5 or 6, **characterized in that** said watch (1) comprises a date mechanism (10) arranged to actuate, daily at midnight, a reset mechanism (110) to remove the values displayed on said at least one first display (81).

8. Watch (1) according to claim 1, **characterized in that** said pedometer mechanism (2) comprises a reduction means (90), adjustable by the user via a first actuator (91), to change the display transmission ratio, according to the type of activity exerted by said user, and to select, on a second display (82) comprised in display means (80) of said watch (1), a scale of effort level.

9. Watch (1) according to claim 1 to 8, **characterized in that** said watch (1) comprises a plurality of said first displays (81) each corresponding to a day of the week, and comprises a date mechanism (10) arranged to actuate, daily before midnight, the reset of a said first display (81) for the following day, and at midnight, the change of display from said first display (81) for the preceding day to said first display (81) for the day that is beginning.

10. Watch (1) according to one of claims 1 to 9, **characterized in that** said watch (1) comprises a second actuator (111) actuatable by the user and arranged to control a reset mechanism (110) for removing the values displayed on said at least one first display (81).

11. Watch (1) according to one of claims 1 to 10, **characterized in that** said limiting means (20; 35; 43) comprises at least one transmission jumper (43) cooperating with the toothing of said ratchet (4) to prevent the pivoting thereof when said moving or pivoting weight (3) moves through a shorter travel than a minimum given travel or through a smaller angle than said minimum given angle (θ₀).

12. Watch (1) according to one of claims 1 to 11, **characterized in that** said moving or pivoting weight (3) pivots and comprises a weight pinion (31) arranged to cooperate, directly or indirectly, with a pair of reverser wheels (41, 42) arranged to transmit a movement in only one direction of pivoting to said ratchet (4).

13. Watch (1) according to claim 12, **characterized in that** said weight pinion (31) meshes with a first toothed sector (34) toothed over at least half the periphery thereof and which comprises a finger (33) returned to a central position by branches (36, 37) of a return spring (35) of substantially circular shape surrounding said weight pinion (31) or said moving or pivoting weight (3), said toothed sector (34) being integral with a wheel (32) meshing with one of said reverser wheels (41, 42), said spring (35) forming said limiting means (20; 35; 43).

14. Watch (1) according to one of the claims 1 to 10, **characterized in that** said moving or pivoting weight (3) comprises a weight pinion (31) arranged to drive the pivoting of a drive lever (38) or a drive sector (38A) which is returned to a median position by return strips (44; 45) and which carries an oblique transmission strip (39) arranged, in only one direction of pivoting of said drive lever (38) or of said drive sector (38A), to push the toothing of a click wheel cooperating with said ratchet (4) or to directly push the toothing of said ratchet (4) in order to pivot the latter, and to slide over said click wheel or respectively said ratchet (4) without driving said ratchet, in the opposite direction of pivoting.

15. Watch (1) according to claims 11 and 14, **characterized in that** said jumper (43) is arranged to cooperate with said click wheel or respectively said ratchet (4) to prevent the return thereof.

16. Watch (1) according to one of the claims 1 to 15, **characterized in that** said ratchet (4) comprises a toothing arranged to cooperate with a complementary toothing of a drive wheel (12) of axis perpendicular to that of said ratchet (4) and driving the pivoting of a shaft (11) carrying, in a fluted area, a sliding pinion (15) pushed back towards said drive wheel (12) by a first elastic return means (33), said shaft (11) carrying a radial arm (18) arranged to push back, against a second elastic return means (23), a second toothed sector (21) extending in a plane parallel to the pivot axis (D0) of said shaft (11) and remote therefrom and whose toothing (22) drives a wheel (25) comprised in said first display (81).

17. Watch (1) according to claim 16, **characterized in that** said arbor (11) is axially movable into discrete positions adjustable by an action of the user, and is arranged to drive a wheel (31) comprised in a second display (82) for the display of an effort level of the activity concerned.

18. Watch (1) according to claim 16 or 17, **characterized in that** said watch comprises a date mechanism (10) controlling the daily jump at midnight of a finger of a spring (29) in order to pivot a lever (19) cooperating with a groove (17) of said sliding pinion (15) to return the latter against said first elastic return means (33).

19. Watch (1) according to one of the claims 1 to 17, **characterized in that** said moving or pivoting weight (3) is arranged to also replenish with energy at least one barrel or energy accumulator.
